(19) Europäisches Patentamt
European Patent Office
Office européen des brevets

(11) **EP 2 185 989 B1**

(12) **EUROPÄISCHE PATENTSCHRIFT**

(45) Veröffentlichungstag und Bekanntmachung des Hinweises auf die Patenterteilung:
**23.03.2011 Patentblatt 2011/12**

(21) Anmeldenummer: **08801762.9**

(22) Anmeldetag: **29.08.2008**

(51) Int Cl.:
***G05D 21/02*** (2006.01)

(86) Internationale Anmeldenummer:
**PCT/EP2008/007084**

(87) Internationale Veröffentlichungsnummer:
**WO 2009/033575 (19.03.2009 Gazette 2009/12)**

(54) **VERFAHREN UND VORRICHTUNG ZUR KONTINUIERLICHEN AUFBEREITUNG BELASTETER FLUIDE**

METHOD AND DEVICE FOR CONTINUOUSLY PROCESSING CONTAMINATED FLUIDS

PROCÉDÉ ET DISPOSITIF DE TRAITEMENT EN CONTINU DE FLUIDES CHARGÉS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.09.2007 DE 102007042520**

(43) Veröffentlichungstag der Anmeldung:
**19.05.2010 Patentblatt 2010/20**

(73) Patentinhaber: **New Environmental Technology GmbH**
**68219 Mannheim (DE)**

(72) Erfinder:
• **SCHARRENBACH, Frank**
**69123 Heidelberg (DE)**
• **WINKLER, Helmut**
**63329 Egelsbach (DE)**
• **ENGHARDT, Reimar**
**32549 Bad Oeynhausen (DE)**

(74) Vertreter: **Köllner, Malte**
**Köllner & Partner**
**Patentanwälte**
**Vogelweidstrasse 8**
**60596 Frankfurt am Main (DE)**

(56) Entgegenhaltungen:
**DE-A1- 3 743 428      DE-A1- 4 403 682**
**US-A- 3 605 775       US-A- 3 731 807**
**US-A- 6 068 012**

**Beschreibung**

Gebiet der Erfindung

Die Erfindung betrifft ein Verfahren zur Messung, Steuerung und Regulierung der optimalen Dosiermenge von in kontinuierlich strömende, zu behandelnde Fluide einzubringende Aufbereitungschemikalien, insbesondere zur Aufbereitung von öl-, tensid-, lack-, farb- und schwermetallhaltigen Prozess- und Abwässern, Emulsionen und wässrigen Dispersionen.

Stand der Technik

Beispielsweise in der Metallbearbeitung werden vielfach wasserlösliche, ölhaltige Kühlschmierstoffe (KSS) eingesetzt. Sie bewirken in der Fertigungstechnik beim Trennen und Umformen von Werkstücken auf Werkzeugmaschinen eine Wärmeabfuhr und Verminderung der Reibung zwischen Werkzeug und Werkstück durch Schmierung. Zusätzlich können sie bei einigen Zerspanungsprozessen beispielsweise auch zur Entfernung der Späne durch Abspülen aus dem Arbeitsumfeld verwendet werden. Die Abwasserbehandlung der verbrauchten Kühlschmierstoffe erfolgt dabei durch das Einbringen von Aufbereitungschemikalien in das zu behandelnde Fluid. Besondere praktische Bedeutung hat die Aufbereitung von öl-, tensid-, lack-, farb- und schwermetallhaltigen Prozesswässern, Emulsionen und wässrigen Dispersionen.

Bis Ende der 80er Jahre des 20. Jahrhunderts wurden die verbrauchten Kühlschmierstoffe unter Einsatz von anorganischen Säuren /Salzen unter Bildung großer Mengen an ölhaltigen anorganischen Schlämmen entsorgt. Zusätzlich erfolgte u. a. eine Aufsalzung sowie eine starke pH-Wert-Absenkung der Wasserphase mit daraus möglicherweise resultierenden Nachfolgeproblemen.

Zur Verbesserung der Entsorgungsmöglichkeiten gewannen in den 90er Jahren des 20. Jahrhunderts in immer größerem Maße sogenannte organische Spaltmittel auf Polyaminbasis (z.B. von den Herstellern Bayer, Henkel, Hoechst) an Bedeutung für die Spaltung verbrauchter Emulsionen.

Die Einsatzmenge dieser organischen Spaltmittel musste in aufwendigen Laborversuchen ermittelt werden. Erst dann konnte chargenweise (batchweise) in einem Tank die Emulsionsspaltung durchgeführt werden. Somit waren die Einsatzmöglichkeiten für diese Spaltmittel auf Großverbraucher, wie z. B. Automobilwerke, Getriebebauer, Entsorger etc. beschränkt. Die entsprechende Verfahrenstechnik für diese Art der Spaltung war ein chargenweises Abarbeiten anfallender Alt-Emulsionsmengen.

Für Klein-Verbraucher etablierte sich, als vermeintlich automatische Verfahrenstechnik, die Ultrafiltration. Bei dieser Technologie hat der Anwender aber den Nachteil, dass die zu entsorgende Restmenge wesentlich wasserreicher ist und damit teilweise um bis zu 100% mehr Entsorgungsmenge anfällt, als bei einer organischen Spaltung. Unabhängig davon, dass Ultrafiltrationsanlagen mit vergleichsweise hohen Investitionskosten verbunden sind, sind die Anlagen störanfällig gegen Membranen schädigende Chemikalien. Die periodisch notwendigen Reinigungen der Membranen führen zusätzlich zu einem sekundären Abfallproblem der eingesetzten Reinigungsprodukte.

Die organische Spaltung von verbrauchten Kühlschmierstoff-Emulsionen und ölhaltigen Abwässern mittels kationischer Spaltmittel wird bisher in aller Regel im Batch-Verfahren durchgeführt. Hauptgrund hierfür ist die notwendige exakte Dosierung des Spaltmittels, um eine Verschlechterung des Ergebnisses durch überdosierung zu verhindern. Die Bestimmung der Spaltmittelmenge erfolgt dazu in einem vorab durchzuführenden Becherglasversuch..Die bisherigen technischen Verfahren zur Bestimmung der Dosiermengen sind zumeist zu langsam, zu träge und teuer, um als Grundlage für einen kontinuierlichen, automatischen Prozess zu dienen.

Seit Anbeginn der organischen Spaltung mangelt es nicht an Überlegungen und Versuchen, geeignete Mess- und Regelverfahren zu finden, die es ermöglichen, die aufwändigen Labortests zu ersetzen und gleichzeitig die Voraussetzungen für eine kontinuierliche Prozessführung zu schaffen.

DE 37 43 428 A1 beschreibt ein Verfahren zum Entwässern von Schlammsuspensionen, wobei die Suspensionen durch Zugabe von Flockungsmitteln auf eine vorbestimmte Flockengröße eingestellt werden.

US 3,731,807 beschreibt eine Vorrichtung ebenfalls zur Spaltung von Suspensionen, welche eine Mehrzahl von Spaltungsbehältern beinhaltet. Die optimale Dosierung batchweise durch Messung in den einzelnen Spaltungsbehältern bestimmt.

DE 44 03 682 A1 beschreibt ein Verfahren zur Einstellung des pH-Wertes von Trinkwasser gegen einen pH-Sollwert.

In der Schrift US 6,068,012 wird ein Verfahren zum Regeln und Kontrollieren von mehreren Parametern in einem Kühlsystem offenbart.

US 3,605,775 beschreibt ein Verfahren zur Steuerung der Dosierung von Aufbereitungschemikalien gegen einen vorbestimmten Sollwert.

Lösung

Die Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Bei dem erfindungsgemäßen Verfahren zur Messung, Steuerung und Regulierung der optimalen Dosiermenge von in kontinuierlich strömende, zu behandelnde Fluide einzubringenden Aufbereitungschemikalien z.B. organische Emulsionsspalter, wie u. a. kationische Polymere oder mehrwertige Metallsalz-Verbindungen, insbesondere zur Aufbereitung von öl-, tensid-, lack-, farb- und schwermetallhaltigen Prozess- und Abwässern, Emulsionen und wässrigen Dispersionen wird in einem ersten Schritt eine maximale bzw. minimale absolute Dosiermenge an einzubringenden Aufbereitungschemikalien, die nicht über- bzw. unterschritten werden darf, vorgegeben. Die minimale und maximale Dosiermenge wird im Rahmen eines vorhergehenden Screenings an unterschiedlichen Abwasserproben bestimmt.

In einem zweiten Schritt wird vor Beginn der Messung, Steuerung und Regulierung ein Dosier-Scan durchgeführt, bei dem eine voreingestellte Dosiermenge (Dosierrange) geprüft, und die Dosiermenge als optimale Startdosierung verwendet wird, die eine bestimmte Eigenschaft des zu behandelnden Fluids verändert.

Die Auswahl eines geeigneten Spaltmittels und dessen Quantifizierung erfolgt in der Regel einmalig über einen vergleichenden Becherglasversuch. Hierzu können verschiedene Prüfmethoden für die Primärspaltung herangezogen werden, die dem Fachmann bekannt sind. Bei gravierenden Änderungen der Abwasserzusammensetzung sollte diese Prüfung wiederholt werden.

Der Dosier-Scan beinhaltet die Prüfung, bei welcher voreingestellten Dosiermenge der einzubringenden Aufbereitungschemikalien ein relativ günstigster Wert der bestimmten Eigenschaft des zu behandelnden Fluids erreicht wird. Die optimale Startdosierung wird dabei durch das Erreichen eines relativen Minimums der Verlaufskurve der bestimmten Eigenschaft des Fluids in Abhängigkeit von der Menge der einzubringenden Aufbereitungschemikalien definiert. Dabei wird die Menge der einzubringenden Aufbereitungschemikalien durch maximale bzw. minimale absolute Dosiermengen begrenzt. Bei Erreichen des relativen Minimums der Verlaufskurve der bestimmten Eigenschaft gilt die dabei einzubringende Menge der Aufbereitungschemikalien als optimaler Wert (Startdosierung).

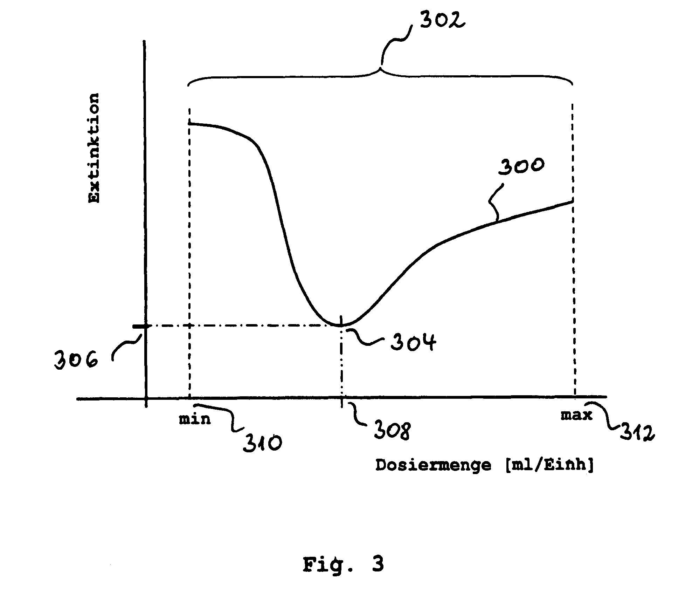

Eine schematische Darstellung der Ermittlung der Startdosierung der einzubringenden Menge der Aufbereitungschemikalien zeigt die Grafik in Fig.3.

Der an dem relativen Minimum der Verlaufskurve der bestimmten Eigenschaft des Fluids gemessene Wert gilt als erster Referenzwert für den automatischen Regelungsvorgang. Zu Beginn der automatischen kontinuierlichen Aufbereitung und/oder Spaltung (Automatik-Modus) wird der ermittelte optimale Wert für die Anfangsdosierung von der Steuerung übernommen.

Dabei wird die bestimmte Eigenschaft des zu behandelnden Fluids mittels einer Messtechnik, wie z.B. eines Sensors für eine Extinktions-, Streulicht oder Trübungsmessung, ermittelt. Außerdem wird in diesem zweiten Schritt die bestimmte Eigenschaft des kontinuierlich strömenden, zu behandelnden Fluids mittels der Messtechnik kontinuierlich, vorzugsweise kontinuierlich und automatisch, überwacht.

Auf der Grundlage der kontinuierlichen (sowie ggf. automatischen) Überwachung der bestimmten Eigenschaft des zu behandelnden Fluids mittels der Messtechnik wird die einzubringende Dosiermenge der Aufbereitungschemikalien kontinuierlich und automatisch gemessen, gesteuert und geregelt.

Wird eine Änderung der überwachten Eigenschaft des zu behandelnden Fluids detektiert, dann wird die einzubringende Dosiermenge der Aufbereitungschemikalien verändert, vorzugsweise erniedrigt. Die Änderung der Dosiermenge wird so lange vorgenommen, bis die bestimmte Eigenschaft des zu behandelnden Fluids optimiert wurde. Dieser optimierte Wert gilt als neuer Referenzwert für den Regelungsvorgang.

Wird im weiteren Verfahrensverlauf eine erneute Änderung der überwachten Eigenschaft des zu behandelnden Fluids detektiert, so wird der vorher beschriebene Schritt jeweils wiederholt, bis die bestimmte Eigenschaft des zu behandelnden Fluids wiederum optimiert wurde.

Die optimale Dosiermenge (Startdosierung) kann sowohl manuell als auch automatisch ermittelt werden.

Die Anwendung neuer Prozessor-Generationen in Verbindung mit leistungsfähigen Sensorsystemen und modernen Algorithmen der Messwerterfassung und -verarbeitung gewährleistet die erfindungsgemäße Realisierung einer kontinuierlichen und automatischen Aufbereitung, insbesondere organischen Spaltung.

Auch die Anwendung auf den jeweiligen Abwassertyp angepasster Spaltmittel, z.B. organischer Emulsionsspalter, wie u. a. kationischer Polymere oder mehrwertiger Metallsalz-Verbindungen, ermöglicht die Realisierung eines kontinuierlichen, automatischen Verfahrens für beinah jeden Volumenstrom.

Von Vorteil ist ferner die Möglichkeit, durch die kontinuierliche Messung des Aufbereitungserfolges (z.B. Spalterfolges) den Verbrauch von einzusetzenden Aufbereitungschemikalien (z.B. Spaltmittel) zu optimieren. Eine derartige Optimierung ist deshalb von besonderem Vorteil, da in den meisten betrieblichen Gegebenheiten Art und Konzentration von Abfallemulsionen gewissen Schwankungen unterliegen. Bisher bekannte Verfahrenstechniken arbeiten meist mit Überschuss- oder Unterdosierung der eingesetzten Chemikalien.

Bei einer vorteilhaften Weiterbildung der Erfindung handelt es sich bei der bestimmten Eigenschaft des zu behandelnden Fluids um den Wert für die Abschwächung einer Strahlung, vorzugsweise von Licht, in dem zu behandelnden Fluid.

Die Abschwächung der Strahlung wird dabei vorteilhafterweise mittels Extinktionsmessung bestimmt. Die Extinktion oder optische Dichte eines Mediums ist ein Maß für die Abschwächung einer Strahlung (zum Beispiel Licht) in einem Medium.

Mit einer einfallenden Strahlung $I_0$ und einer austretenden Strahlung I (nach dem Durchqueren des Mediums) beschreibt die Extinktion E als logarithmische Größe die Transmission τ bei einer bestimmtem Wellenlänge λ:

$$E_\lambda = -\lg\frac{I}{I_0} = \lg\frac{I_0}{I} = \lg\frac{1}{\tau_\lambda}$$

Der Anteil der durchgelassenen Strahlung (Verhältnis von austretender Strahlung zu einfallender Strahlung) wird als Transmissionsgrad bezeichnet. Die Extinktion ist somit der negative dekadische Logarithmus des Transmissionsgrades. Die Abschwächung wird allgemein durch solche Faktoren bestimmt, wie Absorption, Streuung, Beugung und Reflexion der Strahlung und ist abhängig von der Wellenlänge. Durch Messen der Extinktion bei bestimmten Lichtwellenlängen kann man daher auch den Zustand der Reinheit bzw. Trübung eines Mediums (beispielsweise eines Fluids) bestimmen.

Erfindungsgemäß wird die Abschwächung der Strahlung bei einer spezifischen Wellenlänge in einem Wellenlängenbereich gemessen, wo das Fluid die höchste Extinktionsdifferenz nach Behandlung mittels der Aufbereitungschemikalie aufweist. Dazu werden alternativ oder ergänzend im Eignungsfall aber auch Kontinuum-Strahler (Weißlicht) eingesetzt.

Die Messung der Abschwächung der Strahlung erfolgt mittels eines Sensors, vorzugsweise eines Photo-Sensors, der in o. g. Wellenlängenbereichen arbeitet.

Hierbei wird eine Messung der Extinktion (optischen Dichte bzw. Trübung) des Fluids ausgeführt. Im Ergebnis dieser Messung erfolgt eine automatische Regelung der einzubringenden Dosiermenge der Aufbereitungschemikalien. Diese Regelung basiert auf dem Abgleich zwischen einem aktuellen Referenz- und Istwert, beispielsweise der Extinktion eines in einer Kläranlage aufbereiteten Abwasserstromes. Es wird nicht eine im einzelnen interessierende Konzentration o. ä. gemessen, sondern vielmehr beschränkt sich die Messung auf eine spezielle Eigenschaft des Fluids - z. B. die Trübung -, welche Aussagen über die Qualität der Aufbereitung zulässt.

Besonders vorteilhaft ist es, dass die Extinktion des zu behandelnden Fluids kontinuierlich (während des Prozesses) gemessen und erst bei Änderung des ursprünglich gemessenen (optimalen) Wertes, beispielsweise durch Änderung der Zusammensetzung der Abwasserinhaltstoffe und/oder ihrer Konzentration, wird die Dosiermenge geändert, d.h. automatisch nachjustiert.

In einer vorteilhaften Weiterbildung der Erfindung wird das zu behandelnde Fluid und die Aufbereitungschemikalien in einem ersten Schritt miteinander vermischt, bevorzugt mittels einen statischen Mischers, und die Messung der bestimmten Eigenschaft des zu behandelnden Fluids erst in einem bestimmten zeitlichen Abstand nach Durchmischung durchgeführt.

Vorteilhaft ist für die erfindungsgemäße Realisierung einer kontinuierlichen und automatischen Aufbereitung (bspw. organische Spaltung) die Anwendung neuer Prozessor-Generationen in Verbindung mit leistungsfähigen Sensorsystemen und modernen Algorithmen. Die Entwicklung eines sensiblen und schnellen Algorithmus zur Messwerterfassung- und Verarbeitung bzw. zur Auswertung von Messwerten bei Trübungsmessungen ermöglicht in Verbindung mit einer variablen Sensorgeometrie, dass sowohl "schnelle" wie auch "langsame" Spaltreaktionen in der gleichen Anlagentechnik realisiert werden können. Prozesse mit unterschiedlicher Reaktionszeit der Aufbereitungschemikalien lassen sich bspw. durch die Adaption der Verweilzeit in einem Schlauchreaktor optimieren. Die individuelle optische Dichte des zu behandelnden Fluids wird durch Justierung der Lichtstrecke (Sensorgeometrie) ausgeglichen. Mittels dieser beiden Stellgrößen kann das Verfahren an die unterschiedlichen Abwasserzusammensetzungen angepasst werden. Die Sensorgeometrie wird hierbei durch den Abstand zwischen dem Sensor und der Lichtquelle bestimmt.

Von Vorteil ist auch, dass das zu behandelnde Fluid mittels einer Umschaltvorrichtung zu einer nochmaligen Behandlung zurückgeführt werden kann. Dadurch kann im Ergebnis der Reinheitsgrad des behandelten Fluids verbessert werden.

Die Aufgabe wird auch gelöst durch eine erfindungsgemäße Vorrichtung. Die Vorrichtung weist mindestens auf:

a) eine Messeinrichtung mit Mitteln zur Bewertung der bestimmten Eigenschaft des zu behandelnden Fluids;
b) eine Steuereinrichtung mit Mitteln zur Optimierung der einzubringenden Dosiermenge.

In einer vorteilhaften Ausführung weist die Vorrichtung Mittel für eine Fernwartung und -steuerung auf, beispielsweise ein GSM-Modul (Global System for Mobile Communications) und/oder eine TCP/IP-Verbindung (Internet).

Der in der erfindungsgemäßen Vorrichtung integrierte Verbund "Messung" und "Auswertung mit Rückkopplung" zur Dosierautomation ergibt jetzt vorteilhafterweise die Möglichkeit, eine Aufbereitung (z.B. Spaltung) von emulsions- und dispersionsartigen Abfallflüssigkeiten nicht nur kontinuierlich aufzubereiten (z.B. spalten), sondern auch gleichzeitig bei optimaler Reaktionsmittelzugabe sich selbst zu steuern. Die Integration eines GSM-Moduls ermöglicht darüber hinaus Fernabfragen und Fernsteuerung des Aufbereitungsprozesses

Vorteilhaft ist auch, dass die Messung zur Bewertung der bestimmten Eigenschaft des zu behandelnden Fluids im Bypass und/oder direkt im Abwasserstrom erfolgen kann. Der Bypass ist dabei eine Abzweigung des Abwasserstromes, die über die Messeinrichtung führt. Bei der Messung zur Bewertung der bestimmten Eigenschaft des zu behandelnden Fluids direkt im Abwasserstrom sollte die Durchflussmenge jedoch 20m$^3$/Std. nicht überschreiten.

In einer vorteilhaften Weiterbildung der Erfindung enthält die Vorrichtung einen statischen Mischer. Mit Vorteil ist zwischen der Messvorrichtung und dem Mischer eine entsprechend der Reaktionszeit angepasste Mischstrecke, zum Beispiel eine Schlauchschleife oder ein Röhrenflokkulator. Die Messeinrichtung, bzw. der Bypass zur Messeinrichtung, ist bevorzugt hinter dieser Mischstrecke angeordnet.

Durch eine modulare Bauweise des Systems können Anlagen für fast jeden Volumenstrom realisiert werden. Sowohl übliche Membrandosierpumpen wie auch frequenzgesteuerte Pumpensysteme können eingebunden werden. Das Sensorsystem wie auch das Überwachungsprogramm können individuell an den Abwasserprozess angepasst werden, um ein optimales Behandlungsergebnis zu erzielen.

Von Vorteil ist auch die Möglichkeit, dass die Erfindung eine äußerst kompakte Gestaltung der erforderlichen Anlagentechnik ermöglicht, die weitgehend wartungsfrei ist und nur noch einen Bruchteil der Aufstellungsflache erfordert, die für konventionelle Chargen-Spaltanlagen notwendig ist.

Auch kann je nach Kundenwunsch und -bedarf das Steuerungssystem zur Realisierung spezifischer Anlagenkonzepte bis zur kompletten Anlage als "plug and play"-Lösung geliefert werden. Ausführungen aller Art von "stand-alone" bis Einbindung in moderne Profi-Bus-Systeme sind möglich.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    ein Übersichtsschema des erfindungsgemäßen Verfahrens im Bypass des zu behandelnde Abwasserstroms;

Fig. 2    ein Fluss-Schema des erfindungsgemäßen Verfahrens im direkten Abwasserstrom;

Fig. 3    schematische Darstellung der Ermittlung der optimalen Dosiermenge.

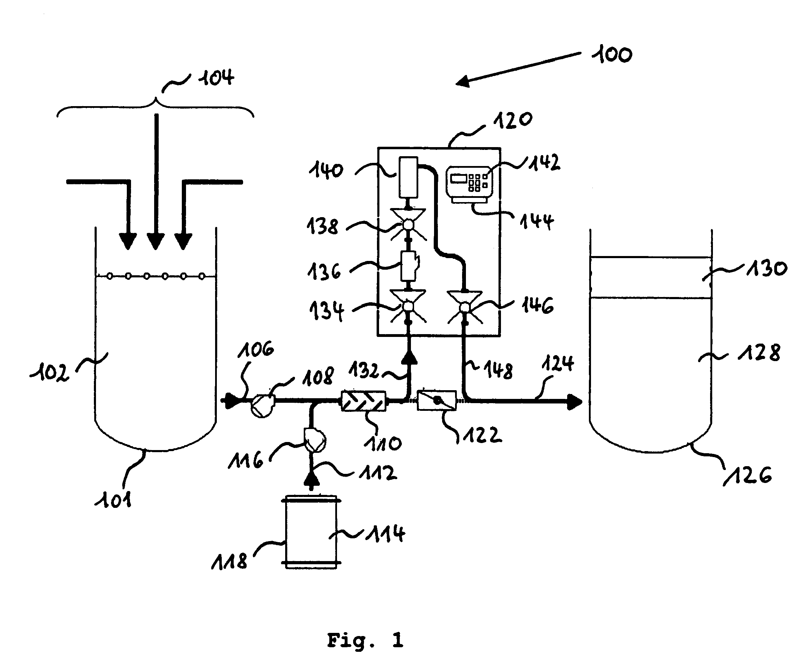

Fig. 1 zeigt z. B. die Vorrichtung 100 zur Durchführung des Verfahrens im Bypass des zu behandelnden Abwasserstromes mit dem Abwasserbehälter 101, in welchem das zu behandelnde Fluid 102 gesammelt wird, welches über verschiedene Leitungen 104 zugeführt wird. Über die Rohrleitung 106 wird das Fluid mit Hilfe einer Pumpe 108 zu einem statischen Mischer 110 befördert. Ebenfalls zum statischen Mischer 110 wird über die Rohrleitung 112 das organische Spaltmittel 114 zugeführt. Die Regulierung der von der Pumpe 116 aus dem Tank 118 mit Spaltmittel zugeführten Dosiermenge wird dabei durch die Steuereinheit 120 realisiert. über die Rohrleitung 121, eine zu 90% geöffnete Reduzierklappe 122 und weiter über die Rohrleitung 124 gelangt das behandelte Fluid zum Spaltbehälter 126, in welchem das gereinigte Wasser 128 und die abgespaltenen Schadstoffe 130 gesammelt werden.

Parallel dazu wird vom statischen Mischer 110 eine anteilige Menge des behandelten Fluids über die Rohrleitung 132 der Steuereinheit 120 zugeführt. Über ein Eingangsventil 134, einen Grobfilter 136 und ein zweites Ventil 138 gelangt diese Menge des Fluids zu einer Messzelle (justierbarer Sensor) 140, vorzugsweise für eine Trübungsmessung als Schwebekörperdurchflussmesser ausgeführt. Hier erfolgt die Ermittlung und Bewertung der speziellen Eigenschaft des behandelten Fluids, vorteilhafterweise zum Beispiel durch die Ermittlung der Trübung (optischen Dichte) mittels einer Extinktionsmessung.

Mit Hilfe der Steuerung 142 kann über den Steuerungsausgang 144 bei einer Veränderung (Abweichung vom aktuellen Referenzwert) der kontrollierten Eigenschaft des Fluids automatisch eine erforderliche Regelung der Dosiermenge des organischen Spaltmittels realisiert werden. Über das Ausgangsventil 146 der Steuereinheit 120 wird auch die kontrollierte Menge des behandelten Fluids über die Rohrleitungen 148; 124 dem Trennbehälter 126 zugeführt.

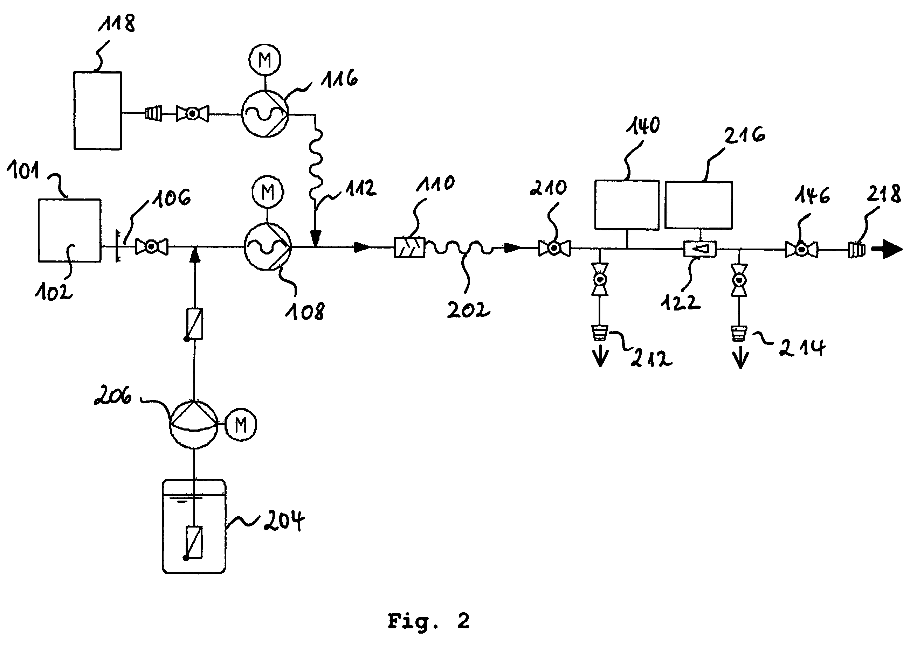

In Fig. 2 wird der Ablauf des Verfahrens im direkten Abwasserstrom schematisch dargestellt. Vom Abwasserbehälter 101 gelangt das Vorlageabwasser 102 (zu behandelndes Fluid) durch das Ventil 200 über die Rohrleitung 106 zur Feedpumpe 108, die das zu behandelnde Fluid zum statischen Mischer 110 befördert. Der Mischer 110 weist eine der Reaktionszeit angepasste Reaktionsstrecke 202 (Mischstrecke) auf, die als Schlauchschleife oder Röhrenflokkulator ausgeführt ist. Ebenfalls zum statischen Mischer 110 wird über die Rohrleitung 112 aus dem Spaltmittel-Behälter 118 das organische Spaltmittel zugeführt. Dabei wird das Spaltmittel in der geforderten Dosiermenge durch die Dosierpumpe 116 zum Mischer 110 befördert. Im Statikmischer 110 wird das organische Spaltmittel mit dem Fluid vermischt.

Bei evtl. Bedarf einer Einstellung des pH-Wertes des Fluids kann aus dem Reservebehälter 204 mit einem pH-Wert-korrigierenden Medium durch die Pumpe 206 dem Fluid ein pH-Wert-korrigierendes Medium zugesetzt werden.

Der Verbrauch an Spaltmittel bzw. der Durchsatz an zu behandelndem Fluid kann jeweils über einen Durchflussmesser, beispielsweise einen kalorimetrischen Durchflussmesser, angezeigt werden.

Hinter dem Mischer 110 wird das behandelte Fluid über die Reaktionsstrecke 202 und weiter durch das Ventil 210 dem Sensor 140 der Steuereinheit zugeführt. Der Sensor 140 ermittelt die aktuellen Werte für die kontrollierte Eigenschaft des Fluids. Die Anpassung der Dosierung erfolgt auf der Grundlage der durch den Sensor 140 der Steuereinheit ermittelten Messwerte. Die Steuerung realisiert dabei automatisch die Regulierung der von der Dosierpumpe 116 aus dem Spaltmittelbehälter 118 zugeführten Dosiermenge.

Beispielsweise kann zur Dosierung vorteilhafterweise eine 3 1/h Excenterschneckenpumpe verwendet werden, die mittels eines Frequenzumformers (FU) bis ca. 87 Hz gesteuert werden kann. Das entspricht einer max. Dosiermenge von Ca. 5 1/m$^3$ bei einem Volumenstrom von 1 m$^3$/h.

Auch die evtl. Zugabe eines pH-Wert-korrigierenden Mediums aus dem Reservebehälter 204 wird automatisch reguliert. Neben dem Sensor 140 gehörten zur Steuereinheit auch die Feedpumpe 108, die Dosierpumpe 116 zur Dosierung von in der Regel 5%-10%-iger Spaltmittellösung sowie die Pumpe 206 zur pH-Wert-Justierung. Die Dosierung des pH-Wert-korrigierenden Mediums in den Abwasserstrom erfolgt i.d.R. über eine Membrandosierpumpe oder über ein pH-gesteuertes Magnetventil.

Zur Entnahme von Proben des Fluids dienen die beiden Probehähne 212 und 214. Über die Reduzierklappe 122 mit dem Flowmeter 216 gelangt das behandelte Fluid durch das Ausgangsventil 146 und über den Auslauf 218 in den Trennbehälter oder zur Flotation.

Der Prozess der automatischen, kontinuierlichen, organischen Spaltung von Emulsionen sollte mit einem Durchsatz von max. 1 m$^3$/h erfolgen und der Original-pH-Wert der Emulsion sollte dabei 7-9 betragen.

Die Graphik in Fig. 3 zeigt eine Verlaufskurve 300 für die Extinktion des zu behandelnden Fluids in Abhängigkeit von der zugeführten Dosiermenge (waagerechte Achse) des organischen Spaltmittels. Der Wertebereich 302 für die zugeführte Dosiermenge ist durch die minimale bzw. maximale Dosiermenge 310, 312 begrenzt. Die Kurve weist in Ihrem Verlauf ein Minimum 304 auf. Der Kurvenverlauf zeigt, dass sich mit Erhöhung der Dosiermenge die Extinktion (Trübung) des Fluids zunächst bis zu einem Minimum 304 verringert. Bei weiterer Erhöhung der Dosiermenge steigt die Extinktion des Fluids wieder an. Daher wird die Dosiermenge, die eine minimale Extinktion (Trübung) 306 des Fluids bewirkt, als optimale Dosiermenge 308 angenommen. Diese zunächst manuell oder automatisch durch den Dosierscan ermittelte optimale Dosiermenge 308 wird als Startdosierung für den Beginn der automatischen Regelung eingestellt. Der bei dieser optimalen Dosiermenge 308 erreichte Wert der Extinktion des Fluids ist somit auch der Referenzwert für den Beginn der automatischen Regelung der Dosiermenge durch die Steuerung. Im Prozess des automatischen Verfahrensablaufes wird bei einer Änderung der Trübung des Fluids (z. B. bei einer veränderten Zusammensetzung der Reaktionspartner bzw. des zu behandelnden Fluids) automatisch eine neue optimale Dosiermenge 308 und auf dieser Basis ein neuer Referenzwert für die automatische Steuerung ermittelt und die Dosiermenge 308 entsprechend automatisch nachjustiert. Der Wert der Extinktion des behandelten Fluids nach Ablauf des Verfahrens ist auch ein Kriterium für den Erfolg der kontinuierlichen automatischen Emulsionsspaltung.

Bezugszeichen

| | |
|---|---|
| 100 | Vorrichtung zur Durchführung des Verfahrens |
| 101 | Abwasserbehälter |
| 102 | zu behandelndes Fluid |
| 104 | Zuführungsleitungen |
| 106 | Rohrleitung |
| 108 | Pumpe |
| 110 | statischer Mischer |
| 112 | Rohrleitung |
| 114 | organisches Spaltmittel |
| 116 | Pumpe |
| 118 | Spaltmittel-Behälter/Tank |
| 120 | Steuereinheit |
| 121 | Rohrleitung |
| 122 | Reduzierklappe |
| 124 | Rohrleitung |
| 126 | Trennbehälter |
| 128 | gereinigtes Fluid |
| 130 | abgespaltene Schadstoffe |

| | |
|---|---|
| 132 | Rohrleitung |
| 134 | Eingangsventil |
| 136 | Grobfilter |
| 138 | zweites Ventil |
| 140 | Messzelle (justierbarer Sensor) |
| 142 | Steuerung |
| 144 | Steuerungsausgang |
| 146 | Ausgangsventil |
| 148 | Rohrleitung |
| 200 | Ventil |
| 202 | Reaktionsstrecke |
| 204 | Reservebehälter mit einem pH-Wert-korrigierenden Medium |
| 206 | Pumpe |
| 208 | Motor |
| 210 | Ventil |
| 212 | Probehahn |
| 214 | Probehahn |
| 216 | Flowmeter |
| 218 | Auslauf zum Spaltbehälter |
| 300 | Verlaufskurve der Extinktion |
| 302 | Wertebereich für Dosiermenge |
| 304 | Minimum im Kurvenverlauf |
| 306 | minimale Extinktion/Referenzwert |
| 308 | optimale Dosiermenge |

**Patentansprüche**

1. Verfahren zur Messung, Steuerung und Regulierung der optimalen Dosiermenge von in kontinuierlich strömende, zu behandelnde Fluide einzubringende Aufbereitungschemikalien 114 zur Aufbereitung von Emulsionen bei dem

a) eine maximale bzw. minimale absolute Dosiermenge (310; 312) an einzubringenden Aufbereitungschemikalien (114), die nicht über- bzw. unterschritten werden darf, vorgegeben wird,

b) vor Beginn der Messung, Steuerung und Regulierung ein Dosier-Scan durchgeführt wird, bei dem ein voreingestellter Dosierbereich, begrenzt durch die maximale, bzw. minimale Dosiermenge, geprüft, eine Dosiermenge durch das Erreichen eines relativen Minimums einer Verlaufskurve der bestimmten Eigenschaft des Fluids in Abhängigkeit von der Menge der einzubringenden Aufbereitungschemikalien ermittelt wird und die ermittelte Dosiermenge als optimale Startdosierung (308) verwendet wird, die eine bestimmte Eigenschaft des zu behandelnden Fluids (102) verändert, und

b1) der Wert der bestimmten Eigenschaft des zu behandelnden Fluids (102) im relativen Minimum als Referenzwert für die bestimmte Eigenschaft des zu behandelnden Fluids (102) verwendet wird, und

bb) wobei die bestimmte Eigenschaft des zu behandelnden Fluids (102) mittels einer Messtechnik ermittelt wird,

c) die bestimmte Eigenschaft des kontinuierlich strömenden, zu behandelnden Fluids (102) mittels der Messtechnik (140) kontinuierlich überwacht wird,

d) die einzubringende Dosiermenge der Aufbereitungschemikalien (114) kontinuierlich und automatisch gemessen, gesteuert und geregelt wird, und

dd) wobei bei einer Änderung der überwachten Eigenschaft des zu behandelnden Fluids (102) die einzubringende Dosiermenge der Aufbereitungschemikalien (114) verändert wird, bis die bestimmte Eigenschaft des zu behandelnden Fluids optimiert wurde,

dd2) der in Schritt dd) gemessene optimierte Wert der bestimmten Eigenschaft des zu behandelnden Fluids als neuer Referenzwert verwendet wird, und

e) bei erneuter Änderung der überwachten Eigenschaft des zu behandelnden Fluids (102) die Schritte dd) und dd2) wiederholt werden.

2. Verfahren nach Anspruch 1,
**dadurch gekennzeichnet,**
**dass** die optimale Startdosierung automatisch ermittelt wird.

**3.** Verfahren nach Anspruch 1 oder 2, **dadurch gekennzeichnet, dass** es sich bei der bestimmten Eigenschaft des zu behandelnden Fluids (102) um den Wert für die Abschwächung einer Strahlung, vorzugsweise von Licht, in dem zu behandelnden Fluid (102) handelt.

**4.** Verfahren nach Anspruch 3, **dadurch gekennzeichnet, dass** die Abschwächung der Strahlung mittels Extinktionsmessung bestimmt wird.

**5.** Verfahren nach Anspruch 3 oder 4, **dadurch gekennzeichnet, dass** die Abschwächung der Strahlung bei einer spezifischen Wellenlänge oder bei Weißlicht gemessen wird.

**6.** Verfahren nach Anspruch 5, **dadurch gekennzeichnet, dass** die Messung mittels eines Sensors, vorzugsweise eines Photo-Sensors, erfolgt.

**7.** Verfahren nach Anspruch 4, **dadurch gekennzeichnet, dass** die Dosiermenge erst bei Änderung der Extinktion geändert wird.

**8.** Verfahren nach einem der vorhergehenden Ansprüche, **dadurch gekennzeichnet, dass** das zu behandelnde Fluid (102) mindestens einer weiteren Behandlung zugeführt wird.

**9.** Verfahren nach einem der vorhergehenden Ansprüche, **dadurch gekennzeichnet, dass** die bestimmte-Eigenschaft des zu-behandelnden Fluids in einem Bypass und/oder direkt im Strom des zu behandelnden Fluids gemessen wird.

**Claims**

**1.** A method for the measurement, open-loop control and closed-loop control of the optimum metering rate of processing chemicals 114 for processing emulsions and to be introduced into continuously flowing fluids which have to be treated in which

> a) a maximum or minimum absolute metering rate (310; 312) of processing chemicals (114) which are to be introduced, which must not be exceeded or undershot, respectively, is preset, b) before the start of the measurement, open-loop control and closed-loop control, a metering scan is carried out, in which a predetermined metering range is tested, which is limited by the maximum and minimum metering rates, a metering rate is determined by reaching a relative minimum of a course of a curve of the defined property of the fluid depending on the rate of the processing chemicals to be introduced and the determined metering rate is used as optimum starting metering rate (308) which changes a defined property of the fluid (102) to be treated, and

> b1) the value in the relative minimum of the defined property of the fluid (102) to be treated is used as reference value for the defined property of the fluid (102) to be treated, and bb) wherein the defined property of the fluid (102) which is to be treated is determined by means of a measurement technology,

c) the defined property of the continuously flowing fluid (102) which is to be treated is monitored continuously by means of the measurement technology (140), d) the metering rate to be introduced of the processing chemicals (114) is continuously and automatically measured and controlled in an open-loop and closed-loop manner, and

> dd) wherein in the event of a change of the monitored property of the fluid (102) which is to be treated, the metering rate to be introduced of the processing chemicals (114) is modified until the defined property of the fluid to be treated was optimized, dd2) the optimized value of the defined property of the fluid to be treated which is measured in step dd) is used as a new reference value, and

e) in the event of another change of the monitored property of the fluid (102) which is to be treated, the steps dd) and dd2) are repeated.

**2.** The method as claimed in claim 1, **characterized in that** the optimum starting metering rate is determined automatically.

**3.** The method as claimed in claim 1 or 2, **characterized in that** the defined property of the fluid (102) which is to be treated is the value for the attenuation of a radiation, preferably light, in the fluid (102) which is to be treated.

**4.** The method as claimed in claim 3, **characterized in that** the attenuation of the radiation is determined by means of extinction measurement.

**5.** The method as claimed in claim 3 or 4, **characterized in that** the attenuation of the radiation is measured at a specific wavelength or in white light.

**6.** The method as claimed in claim 5, **characterized in that** the measurement is made by means of a sensor, preferably a photosensor.

**7.** The method as claimed in claim 4, **characterized in that** the metering rate is not changed until there is a change in the extinction.

**8.** The method as claimed in any one of the preceding claims, **characterized in that** the fluid (102) which is to be treated is fed through at least one further treatment.

**9.** The method as claimed in any one of the preceding claims, **characterized in that** the defined property of the fluid to be treated is measured in a bypass and/or directly in the stream of the fluid to be treated.

**Revendications**

**1.** Procédé de mesure, de contrôle et de régulation du débit optimum de dosage de produits chimiques (114) de préparation d'émulsions et à apporter dans des fluides à traiter qui s'écoulent en continu, et dans lequel

a) un débit maximum ou minimum absolu de dosage (310; 312) en produits chimiques (114) de préparation à apporter qui ne peut être dépassé ou qui doit être atteint est prédéterminé,
b) avant le début de la mesure, du contrôle et de la régulation, un balayage de dosage dans lequel une plage prédéterminée de dosage limitée par le débit maximum et le débit minimum de dosage est testée est exécuté, un débit de dosage est déterminé par l'atteinte d'un minimum relatif sur une courbe d'évolution de la propriété définie du fluide en fonction du débit de produits chimiques de préparation à apporter et le débit déterminé de dosage est utilisé comme dosage optimal de départ (308) qui modifie une propriété définie du fluide (102) à traiter,
b1) la valeur de la propriété, définie au minimum relatif, du fluide (102) à traiter est utilisée comme valeur de référence pour la propriété déterminée du fluide (102) à traiter et
bb) la propriété définie du fluide (102) à traiter est déterminée au moyen d'une technique de mesure,
c) la propriété définie du fluide (102) à traiter et s'écoulant en continu est surveillée au moyen de la technique de mesure (140),
d) le débit de produits chimiques (114) de préparation à apporter est mesuré, contrôlé et régulé en continu et

dd) en cas de modification de la propriété surveillée du fluide (102) à traiter, le débit de produits chimiques de préparation (114) à apporter est modifié jusqu'à ce que la propriété définie du fluide à traiter ait été optimisée,
dd2) la valeur optimisée de la propriété définie du fluide à traiter qui est mesurée à l'étape dd) est utilisée comme nouvelle valeur de référence et

e) en cas de nouvelle modification la propriété surveillée du fluide (102) à traiter, les étapes dd) et dd2) sont répétées.

**2.** Procédé selon la revendication 1, **caractérisé en ce que** le dosage optimal de départ est déterminé automatiquement.

**3.** Procédé selon les revendications 1 ou 2, **caractérisé en ce que** la propriété définie du fluide (102) à traiter est la valeur d'atténuation d'un rayonnement, de préférence de la lumière, par le fluide (102) à traiter.

**4.** Procédé selon la revendication 3, **caractérisé en ce que** l'atténuation du rayonnement est déterminée au moyen d'une mesure d'extinction.

**5.** Procédé selon les revendications 3 ou 4, **caractérisé en ce que** l'atténuation du rayonnement est mesurée à une longueur d'onde spécifique ou sur de la lumière blanche.

**6.** Procédé selon la revendication 5, **caractérisé en ce que** la mesure s'effectue au moyen d'un détecteur et de préférence d'un photodétecteur.

**7.** Procédé selon la revendication 4, **caractérisé en ce que** le débit de dosage n'est modifié qu'après une modification de l'extinction.

**8.** Procédé selon l'une des revendications précédentes, **caractérisé en ce que** le fluide (102) à traiter est amené à au moins un autre traitement.

**9.** Procédé selon l'une des revendications précédentes, **caractérisé en ce que** la propriété définie du fluide à traiter est mesurée dans une dérivation et/ou directement dans l'écoulement de fluide à traiter.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3743428 A1
- US 3731807 A
- DE 4403682 A1
- US 6068012 A
- US 3605775 A